(19) Europäisches Patentamt / European Patent Office / Office européen des brevets

(11) EP 2 816 702 B1

(12) EUROPEAN PATENT SPECIFICATION

(45) Date of publication and mention of the grant of the patent:
**12.05.2021 Bulletin 2021/19**

(21) Application number: **13874854.6**

(22) Date of filing: **14.10.2013**

(51) Int Cl.:
**H02J 7/00** *(2006.01)* **H02H 9/00** *(2006.01)*

(86) International application number:
**PCT/CN2013/085177**

(87) International publication number:
**WO 2014/153947 (02.10.2014 Gazette 2014/40)**

(54) **BATTERY MANAGEMENT METHOD AND APPARATUS AND BATTERY POWERED DEVICE**

BATTERIEVERWALTUNGSVERFAHREN UND -VORRICHTUNG SOWIE BATTERIEBETRIEBENE VORRICHTUNG

PROCÉDÉ ET APPAREIL DE GESTION DE BATTERIE ET DISPOSITIF ALIMENTÉ PAR BATTERIES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2013 CN 201310105977**

(43) Date of publication of application:
**24.12.2014 Bulletin 2014/52**

(73) Proprietor: **Huawei Technologies Co., Ltd.
Longgang District
Shenzhen, Guangdong 518129 (CN)**

(72) Inventors:
• **ZHONG, Zheng
Shenzhen, Guangdong 518129 (CN)**
• **LIU, Wei
Shenzhen, Guangdong 518129 (CN)**
• **WANG, Xingjie
Shenzhen, Guangdong 518129 (CN)**

(74) Representative: **Gill Jennings & Every LLP
The Broadgate Tower
20 Primrose Street
London EC2A 2ES (GB)**

(56) References cited:
EP-A1- 1 729 203     WO-A1-02/071087
CN-A- 1 751 425     CN-A- 101 777 782
CN-A- 102 104 272     CN-A- 103 199 583
JP-A- 2008 118 790     JP-A- 2009 022 099
JP-A- 2010 142 040     JP-A- 2011 169 907

**Description**

**TECHNICAL FIELD**

The present invention relates to the field of power supply technologies, and in particular, to a method and an apparatus for battery management and a battery-powered device.

**BACKGROUND**

At present, two types of batteries are mostly used. One type is disposable primary batteries that cannot be reused. The other type is rechargeable secondary batteries that can be reused. At present, primary batteries mainly include a zinc-carbon battery, an alkaline battery, a pasted zinc-manganese battery, a paper-lined zinc-manganese battery, an alkaline zinc-manganese battery, a button cell, a zinc-air battery, a primary lithium-manganese battery, a mercury battery, and the like. Secondary batteries mainly include a lithium-ion rechargeable battery, a nickel-cadmium rechargeable battery, a nickel-hydride rechargeable battery, a lead-acid battery, and the like.

These batteries often need to be connected in parallel for use. In the prior art, batteries or battery groups that are connected in parallel for use basically have the same capacity and are made of the same material. Normally, batteries or battery groups of different capacities or different materials are not directly connected in parallel for use, because if batteries or battery groups of different capacities or different materials are directly connected in parallel for use, due to a difference in internal resistance and capacity of each battery or battery group, a serious bias current and circulating current between parallel branch circuits may be caused in a charge/discharge process, resulting in a different DOD (depth of discharge, depth of discharge) between the batteries or battery groups that are connected in parallel, which affects a service life of the batteries.

This paragraph describes, by using a discharge process as an example, a process in which a bias current and a circulating current are caused between parallel branch circuits. Regarding a circuit on which several batteries of different capacities or materials are connected in parallel, when a battery on each parallel branch circuit starts to discharge, a voltage at two ends of the battery of each parallel branch circuit is consistent; therefore, no circulating current is caused. However, because of a difference in internal resistance and capacity of the battery on each parallel branch circuit, as the discharging continues, a difference in a current of each parallel branch circuit is gradually caused, causing an inconsistent SOC (state of charge, state of charge) of the battery on each parallel branch circuit, which then causes inconsistency in voltage of each parallel branch circuit; however, end voltage of each parallel branch circuit must be kept consistent. As a result, a current is adjusted automatically between the parallel branch circuits, thereby causing a bias current and a circulating current between the parallel branch circuits. Moreover, the caused bias current and circulating current change constantly as the discharge process continues. Batteries of different capacities or different materials have different actual DOD (depth of discharge) in operation, which affects a cycle life thereof and poses a risk of overcurrent.

JP 2009-022099 A describes a battery management system for responding to a power failure.

JP 2008-118790 A describes a battery management system for monitoring the degradation of rechargeable batteries.

EP 1729203 A1 describes approaches to distributing power across different components in a computer system.

**SUMMARY**

In view of this, embodiments of the present invention provide a method and an apparatus for battery management and a battery-powered device, which can effectively control an adverse impact resulting from a bias current and a circulating current that are caused when batteries or battery groups of different capacities or different materials are directly connected in parallel for use.

Aspects of the invention are set out in the claims.

In the foregoing solutions, a current value on a target parallel branch circuit is detected in real time; when the detected current value on the target parallel branch circuit is greater than a preset current value, a real-time internal resistance value of a battery or battery group on the target parallel branch circuit is obtained; then, the current value on the target parallel branch circuit is adjusted according to the real-time internal resistance value, so that the current value on the target parallel branch circuit equals the preset current value. Each battery management unit manages its parallel branch circuit, which can adjust a current of each parallel branch circuit in real time, so that the current of each parallel branch circuit is balanced, thereby effectively controlling a bias current and a circulating current, stabilizing input and output currents, and implementing management over two or more than two batteries or battery groups connected in parallel on a circuit.

**BRIEF DESCRIPTION OF DRAWINGS**

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.

FIG. 1 is a circuit including two batteries connected in parallel according to an embodiment of the present invention;
FIG. 2 is a flowchart of a method for battery management according to an embodiment of the present invention;
FIG. 3 is a schematic structural diagram of a battery management unit according to an embodiment of the present invention;
FIG. 4 is a flowchart of another method for battery management according to an embodiment of the present invention;
FIG. 5 is a schematic diagram of an operating circuit of a DC/DC charger according to an embodiment of the present invention;
FIG. 6 is a schematic structural diagram of an apparatus for battery management according to an embodiment of the present invention;
FIG. 7 is a schematic structural diagram of another apparatus for battery management according to an embodiment of the present invention;
FIG. 8 is an implementation manner of an adjusting module according to an embodiment of the present invention;
FIG. 9 is a schematic structural diagram of a battery-powered device according to an embodiment of the present invention; and
FIG. 10 is a schematic structural diagram of another battery-powered device according to an embodiment of the present invention.

DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

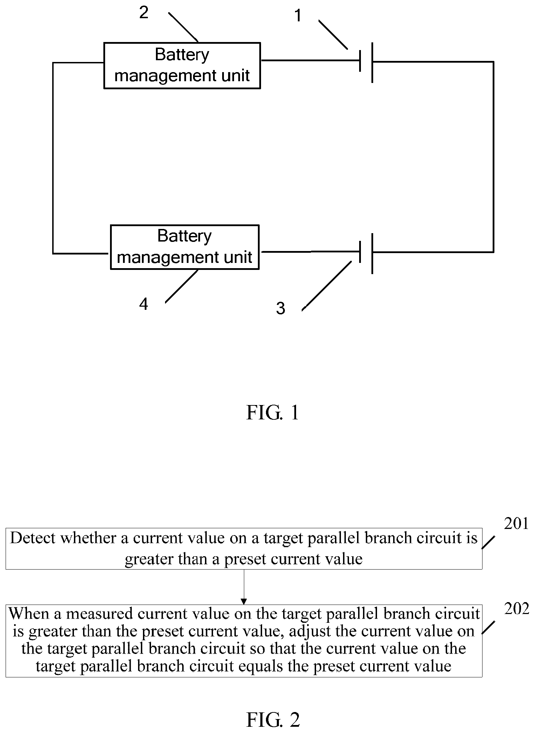

An embodiment of the present invention provides a method for battery management, where the method is used for management over two or more than two batteries or battery groups connected in parallel on a circuit, and a branch circuit where each battery or battery group connected in parallel is located forms one parallel branch circuit. FIG. 1 shows a circuit including two batteries connected in parallel, where a battery 1 and a battery 3 are connected in parallel on the circuit; a battery management unit 2 is configured to manage the battery 1; and a battery management unit 4 is configured to manage the battery 3. In this embodiment, that the battery management unit 2 manages the battery 1 on the circuit shown in FIG. 1 is used as an example to describe the method. As shown in FIG. 2, the method includes:

201. Detect whether a current value on a target parallel branch circuit is greater than a preset current value.

In this embodiment, the target parallel branch circuit is a branch circuit where the battery 1 is located. An apparatus, such as an ammeter, for detecting a current on the battery 1 is placed on the battery management unit 1. The battery management unit 2measures, by using the ammeter, a current flowing through the battery 1, and compares the measured current of the battery 1 with the preset current value.

202. When the detected current value on the target parallel branch circuit is greater than the preset current value, adjust the current value on the target parallel branch circuit so that the current value on the target parallel branch circuit equals the preset current value.

The battery management unit 1 adjusts, according to real-time internal resistance of the battery 1 obtained in the step 202, the current flowing through the battery 1, so that the current flowing through the battery 1 equals the preset current value.

By using the method for battery management, a battery management unit detects, in real time, a current value on a target parallel branch circuit that is managed by the battery management unit; and when the detected current value on the target parallel branch circuit is greater than a preset current value, adjusts the current value on the target parallel branch circuit so that the current value on the target parallel branch circuit equals the preset current value. Each battery management unit manages its parallel branch circuit, which can adjust a current of each parallel branch circuit in real time, so that the current of each parallel branch circuit is balanced, thereby effectively controlling a bias current and a circulating current, stabilizing input and output currents, and implementing management over two or more than two batteries or battery groups connected in parallel on a circuit.

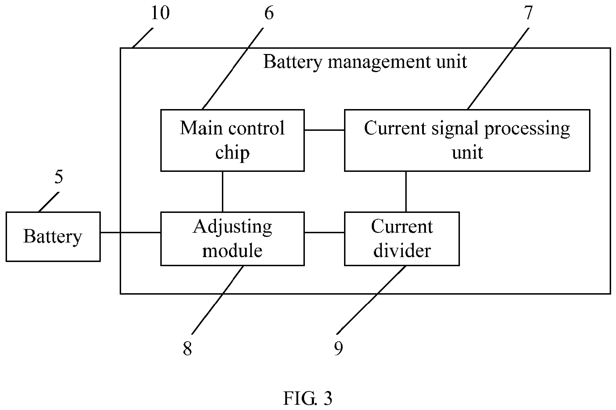

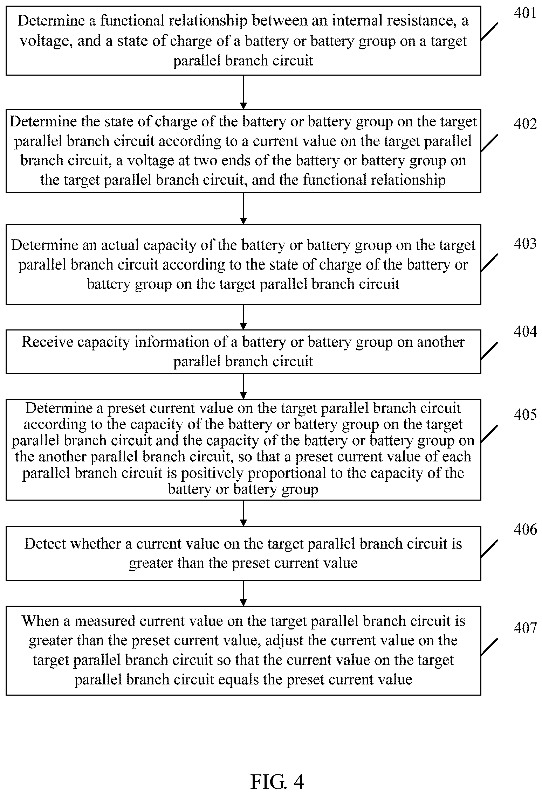

An embodiment of the present invention provides a specific implementation manner of the method for battery management corresponding to FIG. 2. FIG. 3 shows a circuit for specifically implementing a battery management unit in this embodiment. As shown in FIG. 4, the method includes:

401. Determine a functional relationship between an internal resistance, a voltage, and a state of charge of a battery or battery group on a target parallel branch circuit.

Data of the internal resistance, the voltage, and the state of charge of the battery or battery group under conditions of different temperatures and different rates in charge and discharge processes may be obtained by performing tests multiple times, and then obtained data is summarized, thereby determining the functional relationship between the internal resistance, the voltage, and the state of charge of the battery or battery group on the target parallel branch circuit.

402. Determine the state of charge of the battery or battery group on the target parallel branch circuit according to a current value on the target parallel branch circuit, a voltage at two ends of the battery or battery group on the target parallel branch circuit, and the functional relationship.

Specifically, the current value on the target parallel branch circuit may be measured by using a current divider, the voltage at the two ends of the battery or battery group on the target parallel branch circuit is measured by using a voltmeter, and real-time internal resistance of the battery or battery group on the target parallel branch circuit is obtained through calculation according to a formula: voltage = current * resistance.

403. Determine an actual capacity of the battery or battery group on the target parallel branch circuit according to the state of charge of the battery or battery group on the target parallel branch circuit.

404. Receive capacity information of a battery or battery group on another parallel branch circuit.

405. Determine a preset current value on the target parallel branch circuit according to the capacity of the battery or battery group on the target parallel branch circuit and the capacity of the battery or battery group on the another parallel branch circuit, so that a preset current value of each parallel branch circuit is positively proportional to the capacity of the battery or battery group.

Preferably, the preset current value on the target parallel branch circuit is not greater than a rated current of the battery or battery group on the target parallel branch circuit.

406. Detect whether a current value on the target parallel branch circuit is greater than the preset current value.

In this embodiment, the target parallel branch circuit is a branch circuit where a battery 5 is located. A current divider 9 for detecting a current on the battery 5 is placed on a battery management unit 10. The battery management unit 10 measures, by using the current divider 9, a current flowing through the battery 5. The current divider 9 sends a measured current value to a current signal processing unit 7, and the current signal processing unit 7 compares the measured current of the battery 5 with the preset current value of the branch circuit.

If the measured current value on the target parallel branch circuit is not greater than the preset current value, step 406 is performed again. In a case that the current flowing through the battery 5 is not greater than the preset current value, the current flowing through the battery 5 does not need to be adjusted, and detection on the current flowing through the battery 5 is continued.

407. When a measured current value on the target parallel branch circuit is greater than the preset current value, adjust the current value on the target parallel branch circuit so that the current value on the target parallel branch circuit equals the preset current value.

In this embodiment, step 407 may be implemented in the following two manners:

In a first manner, an adjusting module shown in FIG. 3 is an adjustable resistor, where the adjustable resistor is connected in series to the battery or battery group. Specifically, step 408 includes:

> 1. Obtain a real-time internal resistance value of the battery or battery group on the target parallel branch circuit.
> In the case that the current flowing through the battery 5 is greater than the preset current value, the current flowing through the battery 5 needs to be adjusted. In order to implement adjustment on the current of the battery 5 in step 407, the current signal processing unit 7 instructs a main control chip 6 to obtain real-time internal resistance of the battery 5.
> Specifically, the real-time internal resistance value of the battery or battery group on the target parallel branch circuit is calculated according to the measured current value on the target parallel branch circuit and a voltage value at two ends of the battery or battery group on the target parallel branch circuit; or the real-time internal resistance value of the battery or battery group on the target parallel branch circuit is determined according to the measured current value on the target parallel branch circuit, a voltage value at two ends of the battery or battery group on the target parallel branch circuit, and a current temperature value.
> 2. Measure a voltage value at the two ends of the target parallel branch circuit.
> 3. Adjust a resistance value of the adjustable resistor 8 so that the resistance value of the adjustable resistor 8 equals the voltage value at the two ends of the target parallel branch circuit divided by the preset value and then subtracted by the real-time internal resistance value.

In a second manner, the adjusting module shown in FIG. 3 includes a charger, where the charger is connected in series to the battery or battery group, and the charger is configured to adjust, by using a circuit breaker, a current of a branch circuit where the charger is located. Specifically, step 407 is: performing, by a circuit breaker and an inductor inside the charger, processing on the current of the branch circuit where the charger is located, so that the current value on the target parallel branch circuit equals the preset current value.

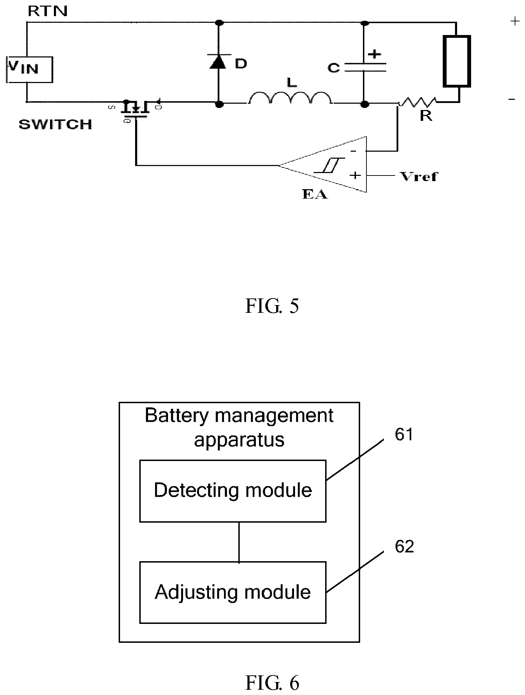

In this embodiment, a DC/DC (direct current) charger may be used as a transformer, where the DC/DC charger may be implemented by using a circuit shown in FIG. 5. If a reference current value of the circuit RTN is set to $I_0$, when a circuit breaker SWITCH is on, power supply voltage $V_{IN}$ charges the battery and an inductor L, and a current flows through a resistor R and is converted into a voltage value, which is compared with reference voltage Vref. When the current is greater than $I_0$, a comparator EA outputs a low level and sets the circuit breaker SWITCH to off, the inductor L discharges, and the inductor L charges by using a diode D and the battery; when the current is smaller than $I_0$, the comparator EA outputs a high level, and the circuit breaker SWITCH is in an on state again, so that an entire system is in a closed-loop adjusting state under a high frequency, thereby limiting a circuit RTN current to $I_0$.

By using the method for battery management, a battery management unit detects a current value on a target parallel branch circuit in real time; and if a measured current value on the target parallel branch circuit is greater than a preset current value, adjusts the current value on the target parallel branch circuit so that the current value on the target parallel branch circuit equals the preset current value. Each battery management unit manages its parallel branch circuit, which can adjust a current of each parallel branch circuit in real time, so that the current of each parallel branch circuit is balanced, thereby effectively controlling a bias current and a circulating current, stabilizing input and output currents, and implementing management over two or more than two batteries or battery groups connected in parallel on a circuit.

In order to implement the foregoing method for battery management, an embodiment of the present invention provides an apparatus for battery management, where the apparatus is configured to manage two or more than two batteries or battery groups connected in parallel on a circuit, and a branch circuit where each battery or battery group connected in parallel is located forms one parallel branch circuit. As shown in FIG. 6, the apparatus includes:

a detecting module 61, configured to detect whether a current value on a target parallel branch circuit is greater than a preset current value, and when the current value on the target parallel branch circuit measured by the detecting module is greater than the preset current value, send an instruction message to an adjusting module 62; and
the adjusting module 62, configured to adjust, after receiving the instruction message sent by the detecting module, the current value on the target parallel branch circuit so that the current value on the target parallel branch circuit equals the preset current value.

The foregoing apparatus for battery management detects a current value on a target parallel branch circuit in real time; if a current value, which is measured by a detecting module, on the target parallel branch circuit is greater than a preset current value, an adjusting module adjusts the current value on the target parallel branch circuit so that the current value on the target parallel branch circuit equals the preset current value. Each battery management unit manages its parallel branch circuit, which can adjust a current of each parallel branch circuit in real time, so that the current of each parallel branch circuit is balanced, thereby effectively controlling a bias current and a circulating current, stabilizing input and output currents, and implementing management over two or more than two batteries or battery groups connected in parallel on a circuit.

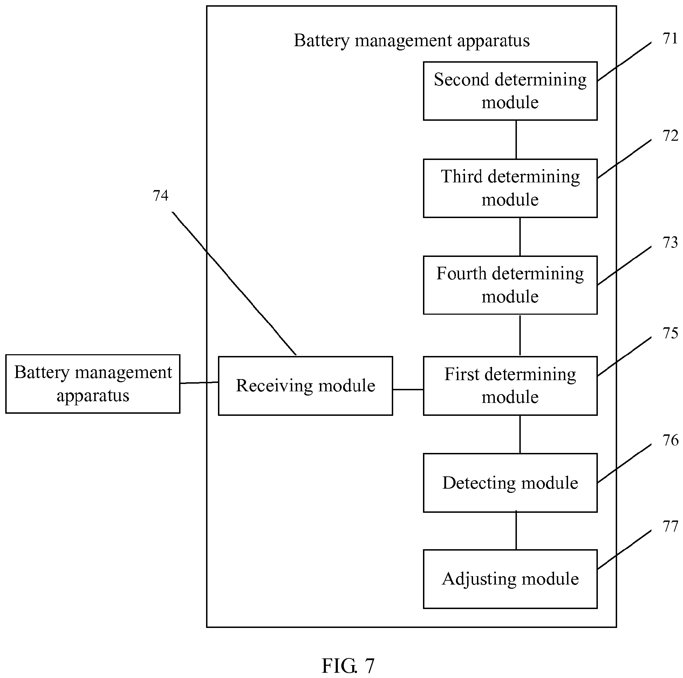

As an improvement on the embodiment shown in FIG. 6, an embodiment of the present invention provides another apparatus for battery management, where the apparatus is configured to manage two or more than two batteries or battery groups connected in parallel on a circuit, and a branch circuit where each battery or battery group connected in parallel is located forms one parallel branch circuit. As shown in FIG. 7, the apparatus includes:

a second determining module 71, configured to determine a functional relationship between an internal resistance, a voltage, and a state of charge of a battery or battery group on a target parallel branch circuit, and send the functional relationship to a third determining module 72;
the third determining module 72, configured to receive the functional relationship sent by the second determining module 71; determine the state of charge of the battery or battery group on the target parallel branch circuit according to a current value on the target parallel branch circuit, a voltage at two ends of the battery or battery group on the target parallel branch circuit, and the functional relationship; and send the state of charge of the battery or battery group on the target parallel branch circuit to a fourth determining module 73;
the fourth determining module 73, configured to receive the state of charge that is of the battery or battery group on the target parallel branch circuit and sent by the third determining module 72; determine an actual capacity of the battery or battery group on the target parallel branch circuit according to the state of charge of the battery or battery group on the target parallel branch circuit; and send the actual capacity of the battery or battery group on the target parallel branch circuit to a first determining module 75;

a receiving module 74, configured to receive capacity information of a battery or battery group on another parallel branch circuit, and send the capacity information of the battery or battery group on the another parallel branch circuit to the first determining module 75, where the capacity information may be sent by another apparatus for battery management; and

the first determining module 75, configured to receive the capacity information that is of the battery or battery group on the another parallel branch circuit and sent by the receiving module 74; receive the actual capacity that is of the battery or battery group on the target parallel branch circuit and sent by the fourth determining module 73; determine a preset current value according to the capacity of the battery or battery group on the target parallel branch circuit and the capacity of the battery or battery group on the another parallel branch circuit, so that a preset current value of each parallel branch circuit is positively proportional to the capacity of the battery or battery group; and send the preset current value to a detecting module 76.

Preferably, the preset current value is not greater than a rated current of the battery or battery group on the target parallel branch circuit.

The detecting module 76 is configured to receive the preset current value sent by the first determining module 75; detect whether the current value on the target parallel branch circuit is greater than the preset current value; and when the current value on the target parallel branch circuit measured by the detecting module is greater than the preset current value, send an instruction message to an adjusting module 77.

The adjusting module 77 is configured to adjust, after receiving the instruction message sent by the detecting module, the current value on the target parallel branch circuit according to the real-time internal resistance value, so that the current value on the target parallel branch circuit equals the preset current value.

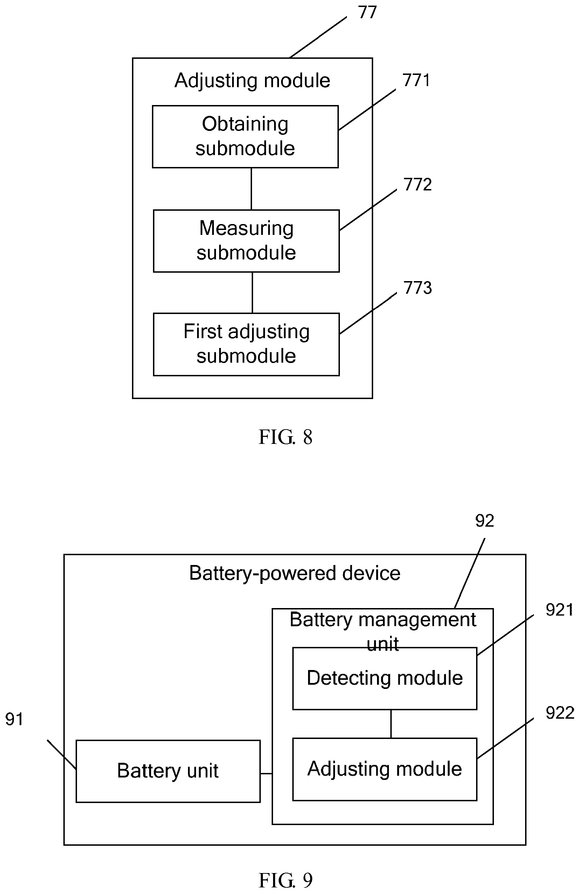

Further, optionally, as shown in FIG. 8, the target parallel branch circuit has an adjustable resistor connected in series to the battery or battery group, and the adjusting module 77 includes:

an obtaining submodule 771, configured to obtain a real-time internal resistance value of the battery or battery group on the target parallel branch circuit, and send the real-time internal resistance value to a first adjusting submodule.

Further, optionally, the obtaining submodule 771 calculates the real-time internal resistance value of the battery or battery group on the target parallel branch circuit according to the measured current value on the target parallel branch circuit and a voltage value at two ends of the battery or battery group on the target parallel branch circuit; or

the obtaining submodule 771 determines the real-time internal resistance value of the battery or battery group on the target parallel branch circuit according to the measured current value on the target parallel branch circuit, a voltage value at two ends of the battery or battery group on the target parallel branch circuit, and a current temperature value.

A measuring submodule 772 is configured to measure a voltage value at two ends of the target parallel branch circuit, and send the voltage value at the two ends of the target parallel branch circuit to the first adjusting submodule.

The first adjusting submodule 773 is configured to receive the real-time internal resistance value that is of the battery or battery group on the target parallel branch circuit and sent by the obtaining submodule; receive the voltage value that is at the two ends of the target parallel branch circuit and sent by the measuring submodule; and adjust a resistance value of the adjustable resistor so that the resistance value of the adjustable resistor equals the voltage value at the two ends of the target parallel branch circuit divided by the preset value and then subtracted by the real-time internal resistance value.

Further, the target parallel branch circuit has a charger connected in series to the battery or battery group, where the charger is configured to adjust, by using a circuit breaker, a current of a branch circuit where the charger is located, and the adjusting, by the adjusting module, the current value on the target parallel branch circuit so that the current value on the target parallel branch circuit equals the preset current value is: performing, by a circuit breaker and an inductor inside the charger, processing on the current of the branch circuit where the charger is located, so that the current value on the target parallel branch circuit equals the preset current value.

According to the foregoing apparatus for battery management, a detecting module detects a current value on a target parallel branch circuit in real time; if a measured current value on the target parallel branch circuit is greater than a preset current value, an adjusting module adjusts the current value on the target parallel branch circuit so that the current value on the target parallel branch circuit equals the preset current value. Each battery management unit manages its parallel branch circuit, which can adjust a current of each parallel branch circuit in real time, so that the current of each parallel branch circuit is balanced, thereby effectively controlling a bias current and a circulating current, stabilizing input and output currents, and implementing management over two or more than two batteries or battery groups connected in parallel on a circuit.

An embodiment of the present invention provides a battery-powered device, which, as shown in FIG. 9, includes a battery unit 91 and a battery management unit (BMU, battery management unit) 92.

The battery unit 91 includes two or more than two batteries or battery groups connected in parallel, where a branch circuit where each battery or battery group connected in parallel is located forms one parallel branch circuit.

The battery management unit 92 is configured to manage the batteries or battery groups connected in parallel in the battery unit, and the battery management unit 92 includes:

a detecting module 921, configured to detect whether a current value on a target parallel branch circuit is greater than a preset current value, and when the current value on the target parallel branch circuit measured by the detecting module is greater than the preset current value, send an instruction message to an adjusting module; and
the adjusting module 922, configured to adjust, after receiving the instruction message sent by the detecting module, the current value on the target parallel branch circuit so that the current value on the target parallel branch circuit equals the preset current value.

According to the foregoing battery-powered device, a battery management unit therein detects a current value on a target parallel branch circuit in real time; and if a measured current value on the target parallel branch circuit is greater than a preset current value, adjusts the current value on the target parallel branch circuit so that the current value on the target parallel branch circuit equals the preset current value. Each battery management unit manages its parallel branch circuit, which can adjust a current of each parallel branch circuit in real time, so that the current of each parallel branch circuit is balanced, thereby effectively controlling a bias current and a circulating current, stabilizing input and output currents, and implementing management over two or more than two batteries or battery groups connected in parallel on a circuit.

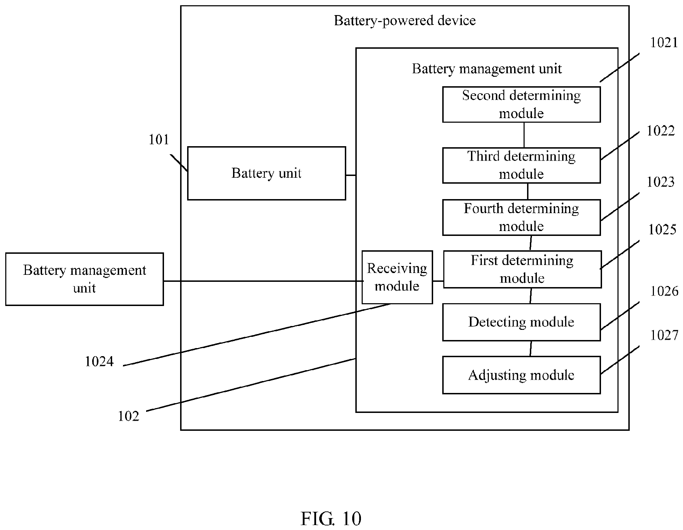

As an improvement on the embodiment corresponding to FIG. 9, an embodiment of the present invention provides another battery-powered device, which, as shown in FIG. 10, includes a battery unit 101 and a battery management unit 102.

The battery unit 101 includes two or more than two batteries or battery groups connected in parallel, where a branch circuit where each battery or battery group connected in parallel is located forms one parallel branch circuit.

The battery management unit 102 is configured to manage the batteries or battery groups connected in parallel in the battery unit, and the battery management unit 102 includes:

a second determining module 1021, configured to determine a functional relationship between an internal resistance, a voltage, and a state of charge of a battery or battery group on a target parallel branch circuit, and send the functional relationship to a third determining module 1022;
the third determining module 1022, configured to receive the functional relationship sent by the second determining module 1021; determine the state of charge of the battery or battery group on the target parallel branch circuit according to a current value on the target parallel branch circuit, a voltage at two ends of the battery or battery group on the target parallel branch circuit, and the functional relationship; and send the state of charge of the battery or battery group on the target parallel branch circuit to a fourth determining module 1023;
the fourth determining module 1023, configured to receive the state of charge that is of the battery or battery group on the target parallel branch circuit and sent by the third determining module 1022; determine an actual capacity of the battery or battery group on the target parallel branch circuit according to the state of charge of the battery or battery group on the target parallel branch circuit; and send the actual capacity of the battery or battery group on the target parallel branch circuit to the first determining module;
a receiving module 1024, configured to receive capacity information of a battery or battery group on another parallel branch circuit, and send the capacity information of the battery or battery group on the another parallel branch circuit to the first determining module 1025, where the capacity information may be sent by another apparatus for battery management; and
the first determining module 1025, configured to receive the capacity information that is of the battery or battery group on the another parallel branch circuit and sent by the receiving module 1024; receive the actual capacity that is of the battery or battery group on the target parallel branch circuit and sent by the fourth determining module 1023; determine the preset current value according to the capacity of the battery or battery group on the target parallel branch circuit and the capacity of the battery or battery group on the another parallel branch circuit, so that a preset current value of each parallel branch circuit is positively proportional to the capacity of the battery or battery group; and send the preset current value to a detecting module 1026.

Preferably, the preset current value is not greater than a rated current of the battery or battery group on the target parallel branch circuit.

The detecting module 1026 is configured to receive the preset current value sent by the first determining module 1025; detect whether the current value on the target parallel branch circuit is greater than the preset current value; and when the current value on the target parallel branch circuit measured by the detecting module is greater than the preset current value, send an instruction message to an adjusting module 1027.

The adjusting module 1027 is configured to adjust, after receiving the instruction message sent by the detecting module 1026, the current value on the target parallel branch circuit according to the real-time internal resistance value, so that the current value on the target parallel branch circuit equals the preset current value.

Further, optionally, the target parallel branch circuit has an adjustable resistor connected in series to the battery or battery group, and the adjusting module 1027 includes an obtaining submodule 10271, a measuring submodule 10272, and a first adjusting submodule 10273.

The obtaining submodule 10271 is configured to obtain a real-time internal resistance value of the battery or battery group on the target parallel branch circuit, and send the real-time internal resistance value to the first adjusting submodule 10273.

Further, optionally, the obtaining submodule 10271 calculates the real-time internal resistance value of the battery or battery group on the target parallel branch circuit according to the measured current value on the target parallel branch circuit and a voltage value at two ends of the battery or battery group on the target parallel branch circuit; or

the obtaining submodule 10271 determines the real-time internal resistance value of the battery or battery group on the target parallel branch circuit according to the measured current value on the target parallel branch circuit, a voltage value at two ends of the battery or battery group on the target parallel branch circuit, and a current temperature value.

The measuring submodule 10272 is configured to measure a voltage value at two ends of the target parallel branch circuit, and send the voltage value at the two ends of the target parallel branch circuit to the first adjusting submodule 10273.

The first adjusting submodule 10273 is configured to receive the real-time internal resistance value that is of the battery or battery group on the target parallel branch circuit and sent by the obtaining submodule 10271; receive the voltage value that is at the two ends of the target parallel branch circuit and sent by the measuring submodule; and adjust a resistance value of the adjustable resistor so that the resistance value of the adjustable resistor equals the voltage value at the two ends of the target parallel branch circuit divided by the preset value and then subtracted by the real-time internal resistance value.

Further, optionally, the target parallel branch circuit has a charger connected in series to the battery or battery group, where the charger is configured to adjust, by using a circuit breaker, a current of a branch circuit where the charger is located, and the adjusting, by the adjusting module, the current value on the target parallel branch circuit so that the current value on the target parallel branch circuit equals the preset current value is: performing, by a circuit breaker and an inductor inside the charger, processing on the current of the branch circuit where the charger is located, so that the current value on the target parallel branch circuit equals the preset current value.

According to the foregoing battery-powered device, a battery management unit therein detects a current value on a target parallel branch circuit in real time; and if a measured current value on the target parallel branch circuit is greater than a preset current value, adjusts the current value on the target parallel branch circuit so that the current value on the target parallel branch circuit equals the preset current value. Each battery management unit manages its parallel branch circuit, which can adjust a current of each parallel branch circuit in real time, so that the current of each parallel branch circuit is balanced, thereby effectively controlling a bias current and a circulating current, stabilizing input and output currents, and implementing management over two or more than two batteries or battery groups connected in parallel on a circuit.

Using a lithium-ion rechargeable battery as an example, lithium-ion rechargeable batteries need to be connected in parallel for use in various electronic products, electric vehicles, electric power storage unit, base stations, and the like. With continuous improvement of lithium-ion battery technologies, an application scope of the lithium-ion battery increases gradually. In recent years, the lithium-ion battery gradually enters the communications field, and may be used as an energy storage unit.

Overcharging and over-discharging may cause a permanent damage to positive and negative poles of a lithium-ion battery. On a molecular level, it may be intuitively understood that over-discharging causes carbon at the negative pole to release too many lithium-ion ions, resulting in collapse of a layered-structure thereof; and overcharging pushes too many lithium-ion ions to a carbon structure at the negative pole, where some lithium-ion ions thereof cannot be released any longer. This is the reason why a lithium-ion battery normally has a control circuit for charging and discharging.

At present, a higher requirement is imposed on a battery capacity in the industry. A large-capacity lithium-ion battery that is relatively mature is available in 50 Ah, 100 Ah, 200 Ah, and the like, which cannot fully meet a requirement of a system. Therefore, parallel connection is required to increase a capacity.

The method, the apparatus, and the device provided by the embodiments of the present invention are especially suitable for managing a rechargeable lithium-ion battery or a lithium-ion battery group.

A technical effect produced by using the foregoing embodiments is supported by experiment data provided as follows:

**Experiment 1**

A test object is two groups of lithium-ion batteries for a communications base station, where one group is a lithium-ion battery group of which a rated voltage is 48 V and a battery capacity is 50 Ah, and the other group is a lithium-ion battery group of which a rated voltage is 48 V and a battery capacity is 200 Ah. The lithium-ion battery group of 48 V and 50 Ah and the lithium-ion battery group of 48 V and 200 Ah are connected in parallel.

The lithium-ion battery group of 48 V and 50 Ah and the lithium-ion battery group of 48 V and 200 Ah connected in parallel are tested, where the test is performed by using the following solution:

1. Perform charge and discharge tests by using a method for battery management and an apparatus for battery management provided by the embodiments of the present invention. Specifically, the test is performed in a manner of adjusting a current by using an adjustable resistor in the embodiments of the present invention.
2. Perform charge and discharge tests without using the technical solutions provided by the embodiments of the present invention, and compare data obtained in the tests.

A test method is as follows:

Step 1: Perform charging by using a constant current of 100 A to reach 56 V.
Step 2: Place a battery aside for 10 seconds.
Step 3: Perform discharging by using a constant current of 75 A to reach 50 V.
Step 4: Place the battery aside for 10 seconds.

Repeat steps 1 to 4 for 500 times.
The following data is obtained:

| | | Two battery groups are directly connected in parallel without using the solution of the embodiments | Two battery groups connected in parallel are managed by using the solution of the embodiments |
|---|---|---|---|
| Maximum current | 48 V 50 Ah branch circuit | Charge: 38.2 A; discharge: 24.7 A | Charge: 24.3 A; discharge: 17.1 A |
| | 48 V 200 Ah branch circuit | Charge: 98.6 A; discharge: 69.8 A | Charge: 85.5 A; discharge: 62.2 A |
| Remaining capacity after charging and discharging | Charge and discharge for 100 times | 96.7% | 98.2% |
| | Charge and discharge for 200 times | 93.2% | 96.5% |
| | Charge and discharge for 300 times | 91.1% | 95.1% |
| | Charge and discharge for 400 times | 89.7% | 94.3% |
| | Charge and discharge for 500 times | 87.4% | 93.9% |

It can be seen from the data in the foregoing table that, by performing management over the lithium-ion batteries in a manner of adjusting a current by using an adjustable resistor provided by the embodiments of the present invention, a maximum current for charging and discharging the batteries can be effectively controlled, which avoids a case of overcharging and over-discharging, thereby extending a service life of the batteries. Moreover, it can also be seen from the remaining capacity of the batteries after charging and discharging in the table that, in terms of cycle performance, the solution for battery management provided by the embodiments of the present invention can effectively reduce consumption of the battery capacity in charge and discharge processes, and the cycle performance is improved more obviously for more cycle times.

**Experiment 2**

A test object is two groups of lithium-ion batteries for a communications base station, where one group is a lithium-ion battery group of which a rated voltage is 12.8 V and a battery capacity is 50 Ah, and the other group is a lithium-ion battery group of which a rated voltage is 12.8 V and a battery capacity is 100 Ah. The lithium-ion battery group of 12.8 V and 50 Ah and the lithium-ion battery group of 12.8 V and 100 Ah are connected in parallel.

The lithium-ion battery group of 12.8 V and 50 Ah and the lithium-ion battery group of 12.8 V and 100 Ah connected in parallel are tested, where the test is performed by using the following solution:

1. Perform charge and discharge tests by using a method for battery management and an apparatus for battery management provided by the embodiments of the present invention. Specifically, the test is performed in a manner of a DC/DC charger in the embodiments of the present invention.

2. Perform charge and discharge tests without using the technical solutions provided by the embodiments of the present invention, and compare data obtained in the tests.

A test method is as follows:

Step 1: Perform charging by using a constant current of 60 A to reach 14 V.
Step 2: Place a battery aside for 10 seconds.
Step 3: Perform discharging by using a constant current of 45 A to reach 12.5 V.
Step 4: Place the battery aside for 10 seconds.

Repeat steps 1 to 4 for 500 times.
The following data is obtained:

| | | Two battery groups are directly connected in parallel without using the solution of the embodiments | Two battery groups connected in parallel are managed by using the solution of the embodiments |
|---|---|---|---|
| Maximum current | 12.8 V 50 Ah branch circuit | Charge: 30.2 A; discharge: 21.7 A | Charge: 26.7 A; discharge: 18.1 A |
| | 12.8 V 100 Ah branch circuit | Charge: 57.6 A; discharge: 40.3 A | Charge: 48.3 A; discharge: 35.2 A |
| Remaining capacity after charging and discharging | Charge and discharge for 100 times | 97.1% | 97.5% |
| | Charge and discharge for 200 times | 94.2% | 95.3% |
| | Charge and discharge for 300 times | 92.2% | 93.9% |
| | Charge and discharge for 400 times | 90.5% | 92.3% |
| | Charge and discharge for 500 times | 88.2% | 91.6% |

It can be seen from the data in the foregoing table that, by performing management over the lithium-ion batteries in a manner of adjusting a current by using a DC/DC charger r provided by the embodiments of the present invention, a maximum current for charging and discharging the batteries can be effectively controlled, which avoids a case of overcharging and over-discharging, thereby extending a service life of the batteries. Moreover, it can also be seen from the remaining capacity of the batteries after charging and discharging in the table that, in terms of cycle performance, the solution for battery management provided by the embodiments of the present invention can effectively reduce consumption of the battery capacity in charge and discharge processes, and the cycle performance is improved more obviously for more cycle times.

To sum up, using the technical solutions provided by the embodiments of the present invention to manage a battery, for example, a lithium-ion battery used for a base station, lithium-ion batteries of different capacities may be connected in parallel, thereby making flexible configuration for various base station sites according to a requirement, which has a high applicability, a high normalizing level, a low cost, and simplicity and convenience in installation and configuration. It is suitable for batteries of different series of materials and different vendors, and a product has a strong extensibility and is convenient for upgrade. If a battery lags behind later, replacement may be not limited by the vendor, material, capacity, and the like, so that the product has a strong maintainability.

By means of the foregoing description of the implementation manners, a person skilled in the art may clearly understand that the present invention may be implemented by software with necessary common hardware. Certainly, the present invention may also be implemented by hardware. However, in many cases, the former is a preferred embodiment. Based on such an understanding, the technical solutions of the present invention essentially, or the part contributing to the prior art may be implemented in a form of a software product. The computer software product is stored in a readable storage medium, for example, a floppy disk, hard disk, or an optical disc of the computer, and includes several instructions for instructing a computer device (which may be a personal computer, a server, or a network device) to perform the methods described in the embodiments of the present invention.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A method for battery management, wherein the method is used for management over two or more than two batteries or battery groups (1, 3) connected in parallel on a circuit, wherein a branch circuit on which each battery or battery group connected in parallel is located forms one parallel branch circuit, **characterized in that** the method comprises:

   determining (401) a functional relationship between an internal resistance, a voltage, and a state of charge of a battery or battery group on a target parallel branch circuit;
   determining (402) the state of charge of the battery or battery group on the target parallel branch circuit according to a current value on the target parallel branch circuit, a voltage at two ends of the battery or battery group on the target parallel branch circuit, and the functional relationship; wherein this step specifically comprises:

      measuring the current value on the target parallel branch circuit by using a current divider;
      measuring the voltage at the two ends of the battery or battery group on the target parallel branch circuit by using a voltmeter; and
      obtaining real-time internal resistance of the battery or battery group on the target parallel branch circuit through calculation according to a formula: voltage = current * resistance;

   determining (403) an actual capacity of the battery or battery group on the target parallel branch circuit according to the state of charge of the battery or battery group on the target parallel branch circuit;
   receiving (404) capacity information of a battery or battery group on another parallel branch circuit;
   determining (405) a preset current value on the target parallel branch circuit according to the capacity of the battery or battery group on the target parallel branch circuit and the capacity of the battery or battery group on the another parallel branch circuit, so that a preset current value of each parallel branch circuit is positively proportional to the capacity of the battery or battery group, wherein the preset current value on the target parallel branch circuit is not greater than a rated current of the battery or battery group on the target parallel branch circuit;
   detecting (406) whether the current value on the target parallel branch circuit is greater than the preset current value; and
   when the detected current value on the target parallel branch circuit is greater than the preset current value, adjusting (407) the current value on the target parallel branch circuit so that the current value on the target parallel branch circuit equals the preset current value;

wherein the target parallel branch circuit has an adjustable resistor connected in series to the battery or battery group, and the adjusting the current value on the target parallel branch circuit so that the current value on the target parallel branch circuit equals the preset current value comprises:

obtaining a real-time internal resistance value of the battery or battery group on the target parallel branch circuit, this obtaining step specifically comprising:

calculating the real-time internal resistance value of the battery or battery group on the target parallel branch circuit according to the measured current value on the target parallel branch circuit and a voltage value at two ends of the battery or battery group on the target parallel branch circuit;

measuring a voltage value at two ends of the target parallel branch circuit; and

adjusting a resistance value of the adjustable resistor so that the resistance value of the adjustable resistor equals the voltage value at the two ends of the target parallel branch circuit divided by the preset current value and then subtracted by the real-time internal resistance value.

**2.** The method for battery management according to claim 1 or 2, wherein the battery or battery group is a lithium-ion battery or a lithium-ion battery group.

**3.** An apparatus for battery management, wherein the apparatus is configured to manage two or more than two batteries or battery groups (1, 3) connected in parallel on a circuit, wherein a branch circuit on which each battery or battery group connected in parallel is located forms one parallel branch circuit, **characterized in that** the apparatus comprises:

a second determining module (71) configured to determine a functional relationship between an internal resistance, a voltage, and a state of charge of a battery or battery group on a target parallel branch circuit, and send the functional relationship to a third determining module (72);

the third determining module (72) configured to determine the state of charge of the battery or battery group on the target parallel branch circuit according to a current value on the target parallel branch circuit, a voltage at two ends of the battery or battery group on the target parallel branch circuit, and the functional relationship; and send the state of charge to a fourth determining module (73); wherein the determining module is specifically configured to:

measure the current value on the target parallel branch circuit by using a current divider;

measure the voltage at the two ends of the battery or battery group on the target parallel branch circuit by using a voltmeter; and

obtain real-time internal resistance of the battery or battery group on the target parallel branch circuit through a calculation according to a formula: voltage = current * resistance;

the fourth determining module (73) configured to determine an actual capacity of the battery or battery group on the target parallel branch circuit according to the state of charge; and send the actual capacity to a first determining module (75);

a receiving module (74) configured to receive capacity information of a battery or battery group on another parallel branch circuit, and send the capacity information to the first determining module (75); and

the first determining module (75) configured to determine a preset current value according to the capacity of the battery or battery group on the target parallel branch circuit and the capacity of the battery or battery group on the another parallel branch circuit, so that a preset current value of each parallel branch circuit is positively proportional to the capacity of the battery or battery group, wherein the preset current value on the target parallel branch circuit is not greater than a rated current of the battery or battery group on the target parallel branch circuit; and send the preset current value to a detecting module (76);

the detecting module (61), configured to detect whether the current value on the target parallel branch circuit is greater than the preset current value, and when the current value on the target parallel branch circuit measured by the detecting module is greater than the preset current value, send an instruction message to an adjusting module; and

the adjusting module (62), configured to adjust, after receiving the instruction message sent by the detecting module, the current value on the target parallel branch circuit so that the current value on the target parallel branch circuit equals the preset current value ;

wherein the target parallel branch circuit has an adjustable resistor connected in series to the battery or battery group, and the adjusting module comprises:

an obtaining submodule (771), configured to obtain a real-time internal resistance value of the battery or battery group on the target parallel branch circuit, by being specifically configured to calculate the real-time internal resistance value of the battery or battery group on the target parallel branch circuit according to the measured current value on the target parallel branch circuit and a voltage value at two ends of the battery or battery group on the target parallel branch circuit; and send the real-time internal resistance value to a first adjusting submodule (773);

a measuring submodule (772), configured to measure a voltage value at two ends of the target parallel branch circuit, and send the voltage value at the two ends of the target parallel branch circuit to the first adjusting submodule; and

the first adjusting submodule, configured to receive the real-time internal resistance value that is of the battery or battery group on the target parallel branch circuit and sent by the obtaining submodule; receive the voltage value that is at the two ends of the target parallel branch circuit and sent by the measuring submodule; and adjust a resistance value of the adjustable resistor so that the resistance value of the adjustable resistor equals the voltage value at the two ends of the target parallel branch circuit divided by the preset current value and then subtracted by the real-time internal resistance value.

4. A battery-powered device, comprising a battery unit (91) and a battery management unit (92), wherein:

the battery unit comprises two or more than two batteries or battery groups connected in parallel, wherein a branch circuit on which each battery or battery group connected in parallel is located forms one parallel branch circuit; and

the battery management unit is configured to manage the batteries or battery groups connected in parallel in the battery unit, **characterized in that** the battery management unit comprises:

a second determining module (1021), configured to determine a functional relationship between an internal resistance, a voltage, and a state of charge of a battery or battery group on a target parallel branch circuit, and send the functional relationship to a third determining module (1022);

the third determining module (1022), configured to determine the state of charge of the battery or battery group on the target parallel branch circuit according to a current value on the target parallel branch circuit, a voltage at two ends of the battery or battery group on the target parallel branch circuit, and the functional relationship wherein the determining module is specifically configured to:

measure the current value on the target parallel branch circuit by using a current divider;
measure the voltage at the two ends of the battery or battery group on the target parallel branch circuit by using a voltmeter; and
obtain real-time internal resistance of the battery or battery group on the target parallel branch circuit through a calculation according to a formula: voltage = current * resistance; and send the state of charge of the battery or battery group on the target parallel branch circuit to a fourth determining module (1023);

the fourth determining module (1023), configured to determine an actual capacity of the battery or battery group on the target parallel branch circuit according to the state of charge; and send the actual capacity of the battery or battery group on the target parallel branch circuit to the first determining module;

a receiving module (1024), configured to receive capacity information of a battery or battery group on another parallel branch circuit, and send the capacity information to the first determining module (1025); and

the first determining module (1025), configured to determine the preset current value according to the capacity of the battery or battery group on the target parallel branch circuit and the capacity of the battery or battery group on the another parallel branch circuit, so that a preset current value of each parallel branch circuit is positively proportional to the capacity of the battery or battery group, wherein the preset current value on the target parallel branch circuit is not greater than a rated current of the battery or battery group on the target parallel branch circuit; and send the preset current value to a detecting module (1026).

the detecting module (921), configured to detect whether the current value on the target parallel branch circuit is greater than the preset current value, and when the current value on the target parallel branch circuit detected by the detecting module is greater than the preset current value, send an instruction message to an adjusting module (922); and

the adjusting module, configured to adjust, after receiving a real-time internal resistance value obtained by a obtaining module, the current value on the target parallel branch circuit according to the real-time internal resistance value, so that the current value on the target parallel branch circuit equals the preset current value; wherein the target parallel branch circuit has an adjustable resistor connected in series to the battery or battery group, and the adjusting module comprises:

an obtaining submodule (771), configured to obtain a real-time internal resistance value of the battery or battery group on the target parallel branch circuit, and send the real-time internal resistance value to a first adjusting submodule, by being specifically configured to calculate the real-time internal resistance value of the battery or battery group on the target parallel branch circuit according to the measured current value on the target parallel branch circuit and a voltage value at two ends of the battery or battery group on the target parallel branch circuit;

a measuring submodule (772), configured to measure a voltage value at two ends of the target parallel branch circuit, and send the voltage value at the two ends of the target parallel branch circuit to the first adjusting submodule; and

the first adjusting submodule (773), configured to receive the real-time internal resistance value that is of the battery or battery group on the target parallel branch circuit and sent by the obtaining submodule; receive the voltage value that is at the two ends of the target parallel branch circuit and sent by the measuring submodule; and adjust a resistance value of the adjustable resistor so that the resistance value of the adjustable resistor equals the voltage value at the two ends of the target parallel branch circuit divided by the preset value and then subtracted by the real-time internal resistance value.

5. The battery-powered device according to claim 4, wherein the battery or battery group is a lithium-ion battery or a lithium-ion battery group.


**Patentansprüche**

1. Verfahren zum Batteriemanagement, wobei das Verfahren zum Management von zwei oder mehr als zwei Batterien oder Batteriegruppen (1, 3) verwendet wird, die in einer Schaltung parallel geschaltet sind, wobei eine Zweigschaltung, in der jede parallel geschaltete Batterie oder Batteriegruppe angeordnet ist, eine Parallelzweigschaltung ausbildet, **dadurch gekennzeichnet, dass** das Verfahren umfasst:

Bestimmen (401) einer funktionalen Beziehung zwischen einem Innenwiderstand, einer Spannung und einem Ladezustand einer Batterie oder Batteriegruppe in einer Zielparallelzweigschaltung;
Bestimmen (402) des Ladezustands der Batterie oder Batteriegruppe in der Zielparallelzweigschaltung gemäß einem Stromwert in der Zielparallelzweigschaltung, einer Spannung an zwei Enden der Batterie oder Batteriegruppe in der Zielparallelzweigschaltung, und der funktionalen Beziehung;
wobei dieser Schritt spezifisch umfasst:

Messen des Stromwerts in der Zielparallelzweigschaltung unter Verwendung eines Stromteilers;
Messen der Spannung an den beiden Enden der Batterie oder Batteriegruppe in der Zielparallelzweigschaltung unter Verwendung eines Voltmeters; und
Beschaffen eines Echtzeitinnenwiderstands der Batterie oder Batteriegruppe in der Zielparallelzweigschaltung durch Berechnen gemäß einer Formel:

$$\text{Spannung} = \text{Strom} * \text{Widerstand};$$

Bestimmen (403) einer tatsächlichen Kapazität der Batterie oder Batteriegruppe in der Zielparallelzweigschaltung gemäß dem Ladezustand der Batterie oder Batteriegruppe in der Zielparallelzweigschaltung;
Empfangen von (404) Kapazitätsinformationen einer Batterie oder Batteriegruppe in einer anderen Parallelzweigschaltung;
Bestimmen (405) eines voreingestellten Stromwerts in der Zielparallelzweigschaltung gemäß der Kapazität der Batterie oder Batteriegruppe in der Zielparallelzweigschaltung und der Kapazität der Batterie oder Batteriegruppe in der anderen Parallelzweigschaltung, sodass ein voreingestellter Stromwert jeder Parallelzweigschaltung positiv proportional zur Kapazität der Batterie oder Batteriegruppe ist, wobei der voreingestellte Stromwert in der Zielparallelzweigschaltung nicht größer ist als ein Nennstrom der Batterie oder Batteriegruppe in der Zielparallelzweigschaltung;
Erfassen (406), ob der Stromwert in der Zielparallelzweigschaltung größer als der voreingestellte Stromwert ist; und

wenn der erfasste Stromwert in der Zielparallelzweigschaltung größer als der voreingestellte Stromwert ist, Einstellen (407) des Stromwerts in der Zielparallelzweigschaltung derart, dass der Stromwert in der Zielparallelzweigschaltung gleich dem voreingestellten Stromwert ist;

wobei die Zielparallelzweigschaltung einen einstellbaren Widerstand aufweist, der in Reihe mit der Batterie oder Batteriegruppe geschaltet ist, und das Einstellen des Stromwerts in der Zielparallelzweigschaltung, so dass der Stromwert in der Zielparallelzweigschaltung gleich dem voreingestellten Stromwert ist, umfasst: Beschaffen eines Echtzeitinnenwiderstandswerts der Batterie oder Batteriegruppe in der Zielparallelzweigschaltung, wobei dieser Beschaffungsschritt speziell umfasst:

Berechnen des Echtzeitinnenwiderstandswerts der Batterie oder Batteriegruppe in der Zielparallelzweigschaltung gemäß dem gemessenen Stromwert in der Zielparallelzweigschaltung und einem Spannungswert an zwei Enden der Batterie oder Batteriegruppe in der Zielparallelzweigschaltung;

Messen eines Spannungswertes an zwei Enden der Zielparallelzweigschaltung; und

Einstellen eines Widerstandswerts des einstellbaren Widerstands, sodass der Widerstandswert des einstellbaren Widerstands gleich dem Spannungswert an den beiden Enden der Zielparallelzweigschaltung ist, geteilt durch den voreingestellten Stromwert und dann verringert um den Echtzeitinnenwiderstandswert.

2. Verfahren zum Batteriemanagement nach Anspruch 1 oder 2, wobei die Batterie oder Batteriegruppe eine Lithium-Ionen-Batterie oder eine Lithium-Ionen-Batteriegruppe ist.

3. Vorrichtung zum Batteriemanagement, wobei die Vorrichtung konfiguriert ist zum Managen von zwei oder mehr als zwei Batterien oder Batteriegruppen (1, 3), die in einer Schaltung parallel geschaltet sind, wobei eine Zweigschaltung, in der jede parallel geschaltete Batterie oder Batteriegruppe angeordnet ist, eine Parallelzweigschaltung ausbildet, **dadurch gekennzeichnet, dass** die Vorrichtung umfasst:

ein zweites Bestimmungsmodul (71), konfiguriert zum Bestimmen einer funktionalen Beziehung zwischen einem Innenwiderstand, einer Spannung und einem Ladezustand einer Batterie oder Batteriegruppe in einer Zielparallelzweigschaltung, und Senden der funktionalen Beziehung an ein drittes Bestimmungsmodul (72);

wobei das dritte Bestimmungsmodul (72) konfiguriert ist zum Bestimmen des Ladezustands der Batterie oder Batteriegruppe in der Zielparallelzweigschaltung gemäß einem Stromwert in der Zielparallelzweigschaltung, einer Spannung an zwei Enden der Batterie oder Batteriegruppe in der Zielparallelzweigschaltung, und der funktionalen Beziehung; und zum

Senden des Ladezustands an ein viertes Bestimmungsmodul (73);

wobei das Bestimmungsmodul speziell konfiguriert ist zum:

Messen des Stromwerts in der Zielparallelzweigschaltung unter Verwendung eines Stromteilers;

Messen der Spannung an den beiden Enden der Batterie oder Batteriegruppe in der Zielparallelzweigschaltung unter Verwendung eines Voltmeters; und

Beschaffen eines Echtzeitinnenwiderstands der Batterie oder Batteriegruppe in der Zielparallelzweigschaltung durch Berechnen gemäß einer Formel:

$$Spannung = Strom * Widerstand;$$

wobei das vierte Bestimmungsmodul (73) konfiguriert ist zum Bestimmen einer tatsächlichen Kapazität der Batterie oder Batteriegruppe in der Zielparallelzweigschaltung gemäß dem Ladezustand; und zum

Senden der tatsächlichen Kapazität an ein erstes Bestimmungsmodul (75);

ein Empfangsmodul (74), konfiguriert zum Empfangen von Kapazitätsinformationen einer Batterie oder Batteriegruppe auf einer anderen Parallelzweigschaltung und zum Senden der Kapazitätsinformationen an das erste Bestimmungsmodul (75); und

wobei das erste Bestimmungsmodul (75) konfiguriert ist zum Bestimmen eines voreingestellten Stromwerts gemäß der Kapazität der Batterie oder Batteriegruppe in der Zielparallelzweigschaltung und der Kapazität der Batterie oder Batteriegruppe in der anderen Parallelzweigschaltung, sodass ein voreingestellter Stromwert jeder Parallelzweigschaltung positiv proportional zur Kapazität der Batterie oder Batteriegruppe ist, wobei der voreingestellte Stromwert in der Zielparallelzweigschaltung nicht größer ist als ein Nennstrom der Batterie oder Batteriegruppe in der Zielparallelzweigschaltung; und zum

Senden des voreingestellten Stromwerts an ein Erfassungsmodul (76);

wobei das Erfassungsmodul (61) konfiguriert ist zum Erfassen, ob der Stromwert in der Zielparallelzweigschaltung größer als der voreingestellte Stromwert ist, und, wenn der von dem Erfassungsmodul gemessene Stromwert in der Zielparallelzweigschaltung größer als der voreingestellte Stromwert ist, zum Senden einer Anweisungsnachricht an ein Einstellmodul; und

wobei das Einstellmodul (62) konfiguriert ist, nach dem Empfangen der von dem Erfassungsmodul gesendeten Anweisungsnachricht den Stromwert in der Zielparallelzweigschaltung so einzustellen, dass der Stromwert in der Zielparallelzweigschaltung gleich dem voreingestellten Stromwert ist;

wobei die Zielparallelzweigschaltung einen einstellbaren Widerstand aufweist, der mit der Batterie oder Batteriegruppe in Reihe geschaltet ist, und wobei das Einstellmodul umfasst:

ein Beschaffungsuntermodul (771), das konfiguriert ist zum Beschaffen eines Echtzeitinnenwiderstandswerts der Batterie oder Batteriegruppe in der Zielparallelzweigschaltung, indem es speziell konfiguriert ist zum Berechnen des Echtzeitinnenwiderstandswerts der Batterie oder Batteriegruppe in der Zielparallelzweigschaltung gemäß dem gemessenen Stromwert in der Zielparallelzweigschaltung und einem Spannungswert an zwei Enden der Batterie oder Batteriegruppe in der Zielparallelzweigschaltung; und zum Senden des Echtzeitinnenwiderstandswerts an ein erstes Einstelluntermodul (773);

ein Messuntermodul (772), konfiguriert zum Messen eines Spannungswerts an zwei Enden der Zielparallelzweigschaltung und zum Senden des Spannungswert an den beiden Enden der Zielparallelzweigschaltung an das erste Einstelluntermodul; und

das erste Einstelluntermodul, konfiguriert zum Empfangen des Echtzeitinnenwiderstandswerts, der von der Batterie oder Batteriegruppe in der Zielparallelzweigschaltung stammt und von dem Beschaffungsuntermodul gesendet wird; zum

Empfangen des Spannungswerts, der an den beiden Enden der Zielparallelzweigschaltung vorliegt und von dem Messuntermodul gesendet wird; und zum

Einstellen eines Widerstandswerts des einstellbaren Widerstands, sodass der Widerstandswert des einstellbaren Widerstands gleich dem Spannungswert an den beiden Enden der Zielparallelzweigschaltung ist, geteilt durch den voreingestellten Stromwert und dann verringert um den Echtzeitinnenwiderstandswert.

4. Batteriebetriebene Vorrichtung, umfassend eine Batterieeinheit (91) und eine Batteriemanagementeinheit (92), wobei:

die Batterieeinheit zwei oder mehr als zwei parallel geschaltete Batterien oder Batteriegruppen umfasst, wobei eine Zweigschaltung, in der jede parallel geschaltete Batterie oder Batteriegruppe angeordnet ist, eine Parallelzweigschaltung ausbildet; und

die Batteriemanagementeinheit konfiguriert ist, um die Batterien oder Batteriegruppen zu managen, die in der Batterieeinheit parallel geschaltet sind, **dadurch gekennzeichnet, dass** die Batteriemanagementeinheit umfasst:

ein zweites Bestimmungsmodul (1021), konfiguriert zum Bestimmen einer funktionalen Beziehung zwischen einem Innenwiderstand, einer Spannung und einem Ladezustand einer Batterie oder Batteriegruppe in einer Zielparallelzweigschaltung, und Senden der funktionalen Beziehung an ein drittes Bestimmungsmodul (1022);

wobei das dritte Bestimmungsmodul (1022) konfiguriert ist zum Bestimmen des Ladezustands der Batterie oder Batteriegruppe in der Zielparallelzweigschaltung gemäß einem Stromwert in der Zielparallelzweigschaltung, einer Spannung an zwei Enden der Batterie oder Batteriegruppe in der Zielparallelzweigschaltung, und der funktionalen Beziehung; wobei das Bestimmungsmodul speziell konfiguriert ist zum:

Messen des Stromwerts in der Zielparallelzweigschaltung unter Verwendung eines Stromteilers;

Messen der Spannung an den beiden Enden der Batterie oder Batteriegruppe in der Zielparallelzweigschaltung unter Verwendung eines Voltmeters; und

Beschaffen eines Echtzeitinnenwiderstands der Batterie oder Batteriegruppe in der Zielparallelzweigschaltung durch Berechnen gemäß einer Formel:

$$\text{Spannung} = \text{Strom} * \text{Widerstand};$$

und zum

Senden des Ladezustands der Batterie oder Batteriegruppe in der Zielparallelzweigschaltung an ein viertes Bestimmungsmodul (1023);

wobei das vierte Bestimmungsmodul (1023) konfiguriert ist zum Bestimmen einer tatsächlichen Kapazität der Batterie oder Batteriegruppe in der Zielparallelzweigschaltung gemäß dem Ladezustand; und zum Senden der tatsächlichen Kapazität der Batterie oder Batteriegruppe in der Zielparallelzweigschaltung an das erste Bestimmungsmodul;

ein Empfangsmodul (1024), konfiguriert zum Empfangen von Kapazitätsinformationen einer Batterie oder Batteriegruppe auf einer anderen Parallelzweigschaltung und zum Senden der Kapazitätsinformationen an das erste Bestimmungsmodul (1025); und

wobei das erste Bestimmungsmodul (1025) konfiguriert ist zum Bestimmen des voreingestellten Stromwerts in der Zielparallelzweigschaltung gemäß der Kapazität der Batterie oder Batteriegruppe in der Zielparallelzweigschaltung und der Kapazität der Batterie oder Batteriegruppe in der anderen Parallelzweigschaltung, sodass ein voreingestellter Stromwert jeder Parallelzweigschaltung positiv proportional zur Kapazität der Batterie oder Batteriegruppe ist, wobei der voreingestellte Stromwert in der Zielparallelzweigschaltung nicht größer ist als ein Nennstrom der Batterie oder Batteriegruppe in der Zielparallelzweigschaltung; und zum

Senden des voreingestellten Stromwerts an ein Erfassungsmodul (1026);

wobei das Erfassungsmodul (921) konfiguriert ist zum Erfassen, ob der Stromwert in der Zielparallelzweigschaltung größer als der voreingestellte Stromwert ist, und, wenn der von dem Erfassungsmodul erfasste Stromwert in der Zielparallelzweigschaltung größer als der voreingestellte Stromwert ist, zum Senden einer Anweisungsnachricht an ein Einstellmodul (922); und

wobei das Einstellmodul konfiguriert ist, nach dem Empfangen eines Echtzeitinnenwiderstandswerts, der durch ein Beschaffungsmodul beschafft wird, den Stromwert in der Zielparallelzweigschaltung gemäß dem Echtzeitinnenwiderstandswert so einzustellen, dass der Stromwert auf der Zielparallelzweigschaltung gleich dem voreingestellten Stromwert ist;

wobei die Zielparallelzweigschaltung einen einstellbaren Widerstand aufweist, der mit der Batterie oder Batteriegruppe in Reihe geschaltet ist, und wobei das Einstellmodul umfasst:

ein Beschaffungsuntermodul (771), das konfiguriert ist zum Beschaffen eines Echtzeitinnenwiderstandswerts der Batterie oder Batteriegruppe in der Zielparallelzweigschaltung, und zum Senden des Echtzeitinnenwiderstandswerts an ein erstes Einstelluntermodul, indem es speziell konfiguriert ist zum Berechnen des Echtzeitinnenwiderstandswerts der Batterie oder Batteriegruppe in der Zielparallelzweigschaltung gemäß dem gemessenen Stromwert in der Zielparallelzweigschaltung und einem Spannungswert an zwei Enden der Batterie oder Batteriegruppe in der Zielparallelzweigschaltung;

ein Messuntermodul (772), konfiguriert zum Messen eines Spannungswerts an zwei Enden der Zielparallelzweigschaltung und zum Senden des Spannungswert an den beiden Enden der Zielparallelzweigschaltung an das erste Einstelluntermodul; und

wobei das erste Einstelluntermodul (773) konfiguriert ist zum Empfangen des Echtzeitinnenwiderstandswerts, der von der Batterie oder Batteriegruppe in der Zielparallelzweigschaltung stammt und von dem Beschaffungsuntermodul gesendet wird; zum

Empfangen des Spannungswerts, der an den beiden Enden der Zielparallelzweigschaltung vorliegt und von dem Messuntermodul gesendet wird; und zum

Einstellen eines Widerstandswerts des einstellbaren Widerstands, sodass der Widerstandswert des einstellbaren Widerstands gleich dem Spannungswert an den beiden Enden der Zielparallelzweigschaltung ist, geteilt durch den voreingestellten Wert und dann verringert um den Echtzeitinnenwiderstandswert.

5. Batteriebetriebene Vorrichtung nach Anspruch 4, wobei die Batterie oder Batteriegruppe eine Lithium-Ionen-Batterie oder eine Lithium-Ionen-Batteriegruppe ist.

**Revendications**

1. Procédé de gestion de batterie, le procédé étant utilisé pour la gestion d'au moins deux batteries ou groupes de batteries (1, 3) connecté(e)s en parallèle sur un circuit, un circuit de dérivation sur lequel chaque batterie ou groupe de batteries connecté(e) en parallèle est situé(e) formant un circuit de dérivation parallèle, **caractérisé en ce que** le procédé comprend :

la détermination (401) d'une relation fonctionnelle entre une résistance interne, une tension et un état de charge d'une batterie ou d'un groupe de batteries sur un circuit de dérivation parallèle cible ;

la détermination (402) de l'état de charge de la batterie ou du groupe de batteries sur le circuit de dérivation parallèle cible en fonction d'une valeur de courant sur le circuit de dérivation parallèle cible, d'une tension à deux extrémités de la batterie ou du groupe de batteries sur le circuit de dérivation parallèle cible, et de la relation fonctionnelle ; cette étape comprenant spécifiquement :

la mesure de la valeur de courant sur le circuit de dérivation parallèle cible en utilisant un diviseur de courant ;

la mesure de la tension aux deux extrémités de la batterie ou du groupe de batteries sur le circuit de dérivation parallèle cible en utilisant un voltmètre ; et

l'obtention de la résistance interne en temps réel de la batterie ou du groupe de batteries sur le circuit de dérivation parallèle cible par calcul selon une formule : tension = courant * résistance ;

la détermination (403) d'une capacité réelle de la batterie ou du groupe de batteries sur le circuit de dérivation parallèle cible en fonction de l'état de charge de la batterie ou du groupe de batteries sur le circuit de dérivation parallèle cible ;

la réception (404) d'informations de capacité d'une batterie ou d'un groupe de batteries sur un autre circuit de dérivation parallèle ;

la détermination (405) d'une valeur de courant prédéfinie sur le circuit de dérivation parallèle cible en fonction de la capacité de la batterie ou du groupe de batteries sur le circuit de dérivation parallèle cible et de la capacité de la batterie ou du groupe de batteries sur l'autre circuit de dérivation parallèle, de sorte qu'une valeur de courant prédéfinie de chaque circuit de dérivation parallèle est positivement proportionnelle à la capacité de la batterie ou du groupe de batteries, la valeur de courant prédéfinie sur le circuit de dérivation parallèle cible n'étant pas supérieure à un courant nominal de la batterie ou du groupe de batteries sur le circuit de dérivation parallèle cible ;

la détection (406) du fait de savoir si la valeur de courant sur le circuit de dérivation parallèle cible est supérieure à la valeur de courant prédéfinie ; et

lorsque la valeur de courant détectée sur le circuit de dérivation parallèle cible est supérieure à la valeur de courant prédéfinie, le réglage (407) de la valeur de courant sur le circuit de dérivation parallèle cible de sorte que la valeur de courant sur le circuit de dérivation parallèle cible est égale à la valeur de courant prédéfinie ; le circuit de dérivation parallèle cible présentant une résistance réglable connectée en série à la batterie ou au groupe de batteries, et le réglage de la valeur de courant sur le circuit de dérivation parallèle cible de sorte que la valeur de courant sur le circuit de dérivation parallèle cible est égale à la valeur de courant prédéfinie comprenant :

l'obtention d'une valeur de résistance interne en temps réel de la batterie ou du groupe de batteries sur le circuit de dérivation parallèle cible, cette étape d'obtention comprenant spécifiquement :

le calcul de la valeur de résistance interne en temps réel de la batterie ou du groupe de batteries sur le circuit de dérivation parallèle cible en fonction de la valeur de courant mesurée sur le circuit de dérivation parallèle cible, et d'une valeur de tension à deux extrémités de la batterie ou du groupe de batteries sur le circuit de dérivation parallèle cible ;

la mesure d'une valeur de tension à deux extrémités du circuit de dérivation parallèle cible ; et

le réglage d'une valeur de résistance de la résistance réglable de sorte que la valeur de résistance de la résistance réglable est égale à la valeur de tension aux deux extrémités du circuit de dérivation parallèle cible divisée par la valeur de courant prédéfinie, puis soumise à la soustraction de la valeur de résistance interne en temps réel.

2. Procédé de gestion de batteries selon la revendication 1 ou 2, dans lequel la batterie ou le groupe de batteries est une batterie au lithium-ion ou un groupe de batteries au lithium-ion.

3. Appareil de gestion de batterie, l'appareil étant configuré pour gérer au moins deux batteries ou groupes de batteries (1, 3) connecté(e)s en parallèle sur un circuit, un circuit de dérivation sur lequel chaque batterie ou groupe de batteries connecté(e) en parallèle est situé(e) formant un circuit de dérivation parallèle, **caractérisé en ce que** l'appareil comprend :

un deuxième module de détermination (71) configuré pour déterminer une relation fonctionnelle entre une résistance interne, une tension et un état de charge d'une batterie ou d'un groupe de batteries sur un circuit de dérivation parallèle cible, et envoyer la relation fonctionnelle à un troisième module de détermination (72) ;

le troisième module de détermination (72) étant configuré pour déterminer l'état de charge de la batterie ou du groupe de batteries sur le circuit de dérivation parallèle cible en fonction d'une valeur de courant sur le circuit de dérivation parallèle cible, d'une tension à deux extrémités de la batterie ou du groupe de batteries sur le circuit de dérivation parallèle cible, et de la relation fonctionnelle ; et

envoyer l'état de charge à un quatrième module de détermination (73) ;

le module de détermination étant spécifiquement configuré pour :

mesurer la valeur de courant sur le circuit de dérivation parallèle cible en utilisant un diviseur de courant ;

mesurer la tension aux deux extrémités de la batterie ou du groupe de batteries sur le circuit de dérivation parallèle cible en utilisant un voltmètre ; et

obtenir la résistance interne en temps réel de la batterie ou du groupe de batteries sur le circuit de dérivation parallèle cible par calcul selon une formule : tension = courant * résistance ;

le quatrième module de détermination (73) étant configuré pour déterminer une capacité réelle de la batterie ou du groupe de batteries sur le circuit de dérivation parallèle cible en fonction de l'état de charge ; et envoyer la capacité réelle à un premier module de détermination (75) ;

un module de réception (74) configuré pour recevoir des informations de capacité d'une batterie ou d'un groupe de batteries sur un autre circuit de dérivation parallèle, et envoyer les informations de capacité au premier module de détermination (75) ; et

le premier module de détermination (75) étant configuré pour déterminer une valeur de courant prédéfinie en fonction de la capacité de la batterie ou du groupe de batteries sur le circuit de dérivation parallèle cible et de la capacité de la batterie ou du groupe de batteries sur l'autre circuit de dérivation parallèle, de sorte qu'une valeur de courant prédéfinie de chaque circuit de dérivation parallèle est positivement proportionnelle à la capacité de la batterie ou du groupe de batteries, la valeur de courant prédéfinie sur le circuit de dérivation parallèle cible n'étant pas supérieure à un courant nominal de la batterie ou du groupe de batteries sur le circuit de dérivation parallèle cible ; et envoyer la valeur actuelle prédéfinie à un module de détection (76) ;

le module de détection (61) étant configuré pour détecter si la valeur de courant sur le circuit de dérivation parallèle cible est supérieure à la valeur de courant prédéfinie, et, lorsque la valeur de courant sur le circuit de dérivation parallèle cible mesurée par le module de détection est supérieure à la valeur de courant prédéfinie, envoyer un message d'instruction à un module de réglage ; et

le module de réglage (62) étant configuré pour régler, après avoir reçu le message d'instruction envoyé par le module de détection, la valeur de courant sur le circuit de dérivation parallèle cible de sorte que la valeur de courant sur le circuit de dérivation parallèle cible est égale à la valeur de courant prédéfinie ;

le circuit de dérivation parallèle cible présentant une résistance réglable connectée en série à la batterie ou au groupe de batteries, et le module de réglage comprenant :

un sous-module d'obtention (771) configuré pour obtenir une valeur de résistance interne en temps réel de la batterie ou du groupe de batteries sur le circuit de dérivation parallèle cible, du fait qu'il est spécifiquement configuré pour calculer la valeur de résistance interne en temps réel de la batterie ou du groupe de batteries sur le circuit de dérivation parallèle cible en fonction de la valeur de courant mesurée sur le circuit de dérivation parallèle cible et d'une valeur de tension à deux extrémités de la batterie ou du groupe de batteries sur le circuit de dérivation parallèle cible ; et envoyer la valeur de résistance interne en temps réel à un premier sous-module de réglage (773) ;

un sous-module de mesure (772) configuré pour mesurer une valeur de tension à deux extrémités du circuit de dérivation parallèle cible, et envoyer la valeur de tension aux deux extrémités du circuit de dérivation parallèle cible au premier sous-module de réglage ; et

le premier sous-module de réglage étant configuré pour recevoir la valeur de résistance interne en temps réel qui est celle de la batterie ou du groupe de batteries sur le circuit de dérivation parallèle cible et qui est envoyée par le sous-module d'obtention ; recevoir la valeur de tension qui se trouve aux deux extrémités du circuit de dérivation parallèle cible et qui est envoyée par le sous-module de mesure ; et régler une valeur de résistance de la résistance réglable de sorte que la valeur de résistance de la résistance réglable est égale à la valeur de tension aux deux extrémités du circuit de dérivation parallèle cible divisée par la valeur de courant prédéfinie, puis soumise à la soustraction de la valeur de résistance interne en temps réel.

4. Dispositif alimenté par batterie, comprenant une unité batteries (91) et une unité de gestion de batteries (92), dans lequel :

l'unité batteries comprend au moins deux batteries ou groupes de batteries connecté(e)s en parallèle, un circuit de dérivation sur lequel chaque batterie ou groupe de batteries connecté(e) en parallèle est situé(e) formant un circuit de dérivation parallèle ; et

l'unité de gestion de batteries étant configurée pour gérer les batteries ou groupes de batteries connecté(e)s en parallèle dans l'unité batteries, **caractérisé en ce que** l'unité de gestion de batteries comprend :

un deuxième module de détermination (1021) configuré pour déterminer une relation fonctionnelle entre une résistance interne, une tension et un état de charge d'une batterie ou d'un groupe de batteries sur un circuit de dérivation parallèle cible, et envoyer la relation fonctionnelle à un troisième module de détermination (1022) ;

le troisième module de détermination (1022) étant configuré pour déterminer l'état de charge de la batterie ou du groupe de batteries sur le circuit de dérivation parallèle cible en fonction d'une valeur de courant sur le circuit de dérivation parallèle cible, d'une tension à deux extrémités de la batterie ou du groupe de batteries sur le circuit de dérivation parallèle cible, et de la relation fonctionnelle, le module de détermination étant spécifiquement configuré pour :

mesurer la valeur de courant sur le circuit de dérivation parallèle cible en utilisant un diviseur de courant ;
mesurer la tension aux deux extrémités de la batterie ou du groupe de batteries sur le circuit de dérivation parallèle cible en utilisant un voltmètre ; et
obtenir la résistance interne en temps réel de la batterie ou du groupe de batteries sur le circuit de dérivation parallèle cible par calcul selon une formule : tension = courant * résistance ; et envoyer l'état de charge de la batterie ou du groupe de batteries sur le circuit de dérivation parallèle cible à un quatrième module de détermination (1023) ;

le quatrième module de détermination (1023) étant configuré pour déterminer une capacité réelle de la batterie ou du groupe de batteries sur le circuit de dérivation parallèle cible en fonction de l'état de charge ; et envoyer la capacité réelle de la batterie ou du groupe de batteries sur le circuit de dérivation parallèle cible au premier module de détermination ;

un module de réception (1024) configuré pour recevoir des informations de capacité d'une batterie ou d'un groupe de batteries sur un autre circuit de dérivation parallèle, et envoyer les informations de capacité au premier module de détermination (1025) ; et

le premier module de détermination (1025) étant configuré pour déterminer la valeur de courant prédéfinie en fonction de la capacité de la batterie ou du groupe de batteries sur le circuit de dérivation parallèle cible et de la capacité de la batterie ou du groupe de batteries sur l'autre circuit de dérivation parallèle, de sorte qu'une valeur de courant prédéfinie de chaque circuit de dérivation parallèle est positivement proportionnelle à la capacité de la batterie ou du groupe de batteries, la valeur de courant prédéfinie sur le circuit de dérivation parallèle cible n'étant pas supérieure à un courant nominal de la batterie ou du groupe de batteries sur le circuit de dérivation parallèle cible ; et envoyer la valeur de courant prédéfinie à un module de détection (1026) ;

le module de détection (921) étant configuré pour détecter si la valeur de courant sur le circuit de dérivation parallèle cible est supérieure à la valeur de courant prédéfinie, et, lorsque la valeur de courant sur le circuit de dérivation parallèle cible détectée par le module de détection est supérieure à la valeur de courant prédéfinie, envoyer un message d'instruction à un module de réglage (922) ; et

le module de réglage étant configuré pour régler, après avoir reçu une valeur de résistance interne en temps réel obtenue par un module d'obtention, la valeur de courant sur le circuit de dérivation parallèle cible en fonction de la valeur de résistance interne en temps réel, de sorte que la valeur de courant sur le circuit de dérivation parallèle cible est égale à la valeur de courant prédéfinie ;

le circuit de dérivation parallèle cible présentant une résistance réglable connectée en série à la batterie ou au groupe de batteries, et le module de réglage comprenant :

un sous-module d'obtention (771) configuré pour obtenir une valeur de résistance interne en temps réel de la batterie ou du groupe de batteries sur le circuit de dérivation parallèle cible, et envoyer la valeur de résistance interne en temps réel à un premier sous-module de réglage, du fait qu'il est spécifiquement configuré pour calculer la valeur de résistance interne en temps réel de la batterie ou du groupe de batteries sur le circuit de dérivation parallèle cible en fonction de la valeur de courant mesurée sur le circuit de dérivation parallèle cible et d'une valeur de tension à deux extrémités de la batterie ou du groupe de batteries sur le circuit de dérivation parallèle cible ;

un sous-module de mesure (772) configuré pour mesurer une valeur de tension à deux extrémités du circuit de dérivation parallèle cible, et envoyer la valeur de tension aux deux extrémités du circuit de dérivation parallèle cible au premier sous-module de réglage ; et

le premier sous-module de réglage (773) étant configuré pour recevoir la valeur de résistance interne en temps réel qui est celle de la batterie ou du groupe de batteries sur le circuit de dérivation parallèle cible et qui est envoyée par le sous-module d'obtention ; recevoir la valeur de tension qui se trouve aux deux extrémités du circuit de dérivation parallèle cible et qui est envoyée par le sous-module de mesure ; et régler une valeur de résistance de la résistance réglable de sorte que la valeur de résistance de la résistance réglable est égale à la valeur de tension aux deux extrémités du circuit de dérivation parallèle cible divisée par la valeur prédéfinie, puis soumise à la soustraction de la valeur de résistance interne en temps réel.

5. Dispositif alimenté par batterie selon la revendication 4, dans lequel la batterie ou le groupe de batteries est une batterie au lithium-ion ou un groupe de batteries au lithium-ion.

FIG. 1

| | |
|---|---|
| Detect whether a current value on a target parallel branch circuit is greater than a preset current value | 201 |
| When a measured current value on the target parallel branch circuit is greater than the preset current value, adjust the current value on the target parallel branch circuit so that the current value on the target parallel branch circuit equals the preset current value | 202 |

FIG. 2

FIG. 3

Determine a functional relationship between an internal resistance, a voltage, and a state of charge of a battery or battery group on a target parallel branch circuit — 401

Determine the state of charge of the battery or battery group on the target parallel branch circuit according to a current value on the target parallel branch circuit, a voltage at two ends of the battery or battery group on the target parallel branch circuit, and the functional relationship — 402

Determine an actual capacity of the battery or battery group on the target parallel branch circuit according to the state of charge of the battery or battery group on the target parallel branch circuit — 403

Receive capacity information of a battery or battery group on another parallel branch circuit — 404

Determine a preset current value on the target parallel branch circuit according to the capacity of the battery or battery group on the target parallel branch circuit and the capacity of the battery or battery group on the another parallel branch circuit, so that a preset current value of each parallel branch circuit is positively proportional to the capacity of the battery or battery group — 405

Detect whether a current value on the target parallel branch circuit is greater than the preset current value — 406

When a measured current value on the target parallel branch circuit is greater than the preset current value, adjust the current value on the target parallel branch circuit so that the current value on the target parallel branch circuit equals the preset current value — 407

FIG. 4

RTN

$V_{IN}$

SWITCH

D

L

C

R

EA

Vref

+

−

FIG. 5

Battery management
apparatus

Detecting module

61

Adjusting module

62

FIG. 6

FIG. 7

FIG. 8

FIG. 9

FIG. 10

**EP 2 816 702 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009022099 A
- JP 2008118790 A
- EP 1729203 A1